(19) Europäisches Patentamt
European Patent Office
Office européen des brevets

(11) EP 1 182 580 A1

(12) EUROPEAN PATENT APPLICATION

(43) Date of publication:
27.02.2002 Bulletin 2002/09

(51) Int Cl.$^7$: G06F 17/30

(21) Application number: 00307256.8

(22) Date of filing: 23.08.2000

(84) Designated Contracting States:
AT BE CH CY DE DK ES FI FR GB GR IE IT LI LU MC NL PT SE
Designated Extension States:
AL LT LV MK RO SI

(71) Applicant: Matsushita Electric Industrial Co., Ltd.
Kadoma-shi, Osaka 571-8501 (JP)

(72) Inventors:
- Noguchi, Naohiko
Yokohama 222-0031 (JP)
- Kanno, Yuji
Yokohama 232-0061 (JP)
- Sato, Mitsuhiro
Kanagawa-ken 243-0216 (JP)
- Ito, Hayashi
Matsudo-shi, Chiba-ken 271-0045 (JP)
- Fukushige, Yoshio
Fujisawa-shi, Kanagawa-ken 251-0002 (JP)
- Inaba, Mitsuaki
Ota-ku, Tokyo 144-0046 (JP)

(74) Representative:
Dempster, Benjamin John Naftel et al
Withers & Rogers, Goldings House, 2 Hays Lane
London SE1 2HW (GB)

# (54) Document retrieval and classification method and apparatus

(57) In a document retrieval and classification system, a retrieving operation is performed on a database of documents in accordance with retrieval conditions entered by a user so as to pick up retrieved documents as intended. The user is allowed to input classification standards of a plurality of classifications in response to the retrieved documents picked up by the retrieving operation. The classification standards are converted into retrieval conditions. The similarity between the converted retrieval conditions resultant from the classification standards and the retrieved documents picked up by the retrieving operation is calculated. And, an attribute of each retrieved document picked up by the retrieving operation to each classification is calculated with reference to the similarity, thereby classifying each retrieved document into a classification having a highest attribute.

FIG. 1

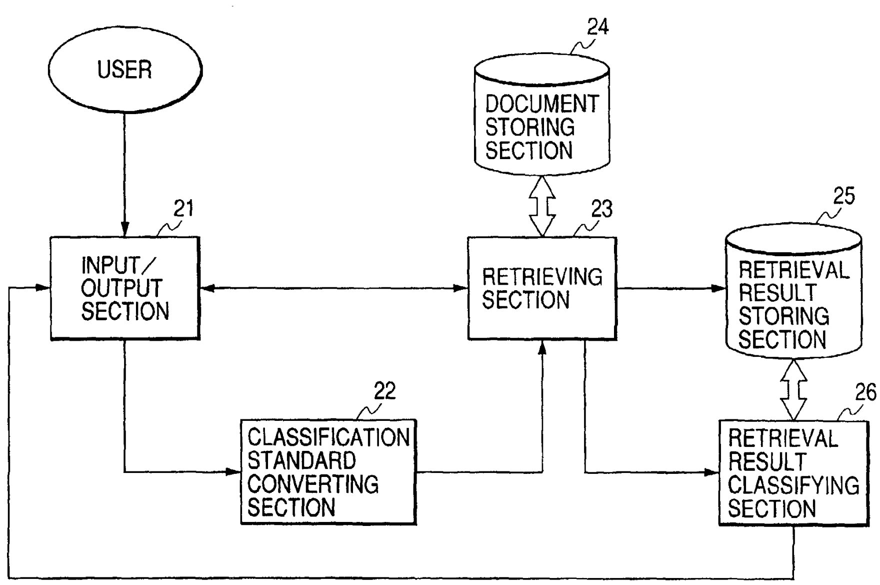




Printed by Jouve, 75001 PARIS (FR)

## Description

### BACKGROUND OF THE INVENTION

The present invention relates to a document retrieval and classification method for searching documents as intended from a database which stores a bunch of electronic document data. Furthermore, the present invention relates to a document retrieval and classification system performing the document retrieval and classification method of the present invention.

The present invention is applicable to various kinds of document information stored in a data base, such as memory devices installed in word processors, office computers, personal computers or the like, as well as information storing media loadable to them.

Recent development in the field of data communications, including e-mails, electronic catalog, and electronic publications, provides a great amount of document information accessible or available for users. Furthermore, the number of Internet users is increasing drastically. Thus, the demand for searching or collecting documents as intended from such a huge database is increasing. At the same time, the demand for classifying the picked up document as intended is increasing.

However, according to conventional document retrieval and classification systems, the retrieval conditions and the classification standards are usually fixed in advance or according to users' preferences. In this respect, the conventional document retrieval and classification systems are stationary in the standpoints of the retrieval conditions and the classification standards.

### SUMMARY OF THE INVENTION

An object of the present invention is to improve the flexibility in the document retrieval and classification.

Another object of the present invention is to allow the users to arbitrarily change the standpoints of the retrieval conditions and the classification standards.

Another object of the present invention is to allow the users to perform the retrieval and classification operation according to their instantaneous judgement responsive to the retrieval result.

Another object of the present invention is to realize an automatic classification so as to assist the users' intellectual activities.

To accomplish the above and other related objects, the present invention provides a first document retrieval and classification system, comprising an input/output means for allowing a user to enter retrieval conditions and classification standards. A retrieving means is provided for performing a retrieving operation on a database of documents in accordance with the retrieval conditions consisting of arbitrary words or arbitrary character strings, and for calculating similarity between retrieved documents picked up by the retrieving operation and the retrieval conditions. A retrieval result storing means is provided for storing the retrieved documents picked up by the retrieving operation. A classification standard converting means is provided for converting the classification standards into retrieval conditions. The classification standards are expressed as a set of arbitrary words or arbitrary character strings. A retrieval result classifying means is provided for classifying the retrieved documents picked up by the retrieving operation in accordance with the plurality of classification standards.

Thus, the present invention can provide a flexible document retrieval and classification system so at to assist the intellectual activities during the document retrieval and classification.

According to preferable embodiments of the present invention, the retrieving means is responsive to the retrieval conditions entered by the user via the input/output means, and executes the retrieving operation on the database of documents in accordance with the retrieval conditions entered by the user. The retrieval result storing means stores the retrieved documents picked up by the retrieving operation of the retrieving means. The classification standard converting means is responsive to a plurality of classification standards entered by the user via the input/output means and produces converted retrieval conditions resultant from the entered classification standards. The retrieving means calculates the similarity between the converted retrieval conditions and the retrieved documents picked up by the retrieving operation and stored in the retrieval result storing means. And, the retrieval result classifying means calculates an attribute of each retrieved document picked up by the retrieving operation to each classification standard with reference to the similarity calculated by the retrieving means, thereby performing a document classification.

With this arrangement, the users can arbitrarily enter the retrieval conditions when they have such words or character strings in their minds during the retrieval operation. Furthermore, the users can arbitrarily classify the retrieval result as intended.

According to the preferable embodiments of the present invention, the input/output means allows the user to input a plurality of classification standards each consisting of a set of arbitrary words or arbitrary character strings, and the classification standard converting means converts the set of arbitrary words or arbitrary character strings into retrieval conditions.

With this arrangement, the users can enter arbitrary words or arbitrary character strings coming up in their minds as the classification standards (i.e., standpoints of classification). Thus, a great flexibility is given in setting the standpoints of classification.

According to the preferable embodiments of the present invention, the document retrieval and classification system further comprises a keyword detecting means for extracting keywords from an arbitrary sentence or document. In this case, the keyword detecting means is responsive to a plurality of classification standards expressed by an arbitrary sentence entered by the user via the input/output means and extracts keywords from the entered sentences. And, the classification standard converting means converts a set of the extracted keywords into retrieval conditions.

With this arrangement, the users can directly enter an arbitrary sentence belonging to an intended field as the classification standard. This makes it possible to express complicated classification standpoints. Thus, the setting of the standpoints of classification can be flexibly performed with multiple aspects.

According to the preferable embodiments of the present invention, the input/output means allows the user to designate a plurality of documents serving as a plurality of classification standards. The designated documents are selected from the retrieved documents picked up by the retrieving operation. The keyword detecting means extracts keywords from the designated documents. And, the classification standard converting means converts a set of the extracted keywords into retrieval conditions.

With this arrangement, after the users have confirmed the retrieved documents picked up by the retrieving operation, the users can select the retrieved documents themselves or part of them as expressing the standpoints of classification. Thus, the setting of the standpoints of classification can be easily performed.

Furthermore, the present invention provides a second document retrieval and classification system, comprising an input/output means for allowing a user to enter retrieval conditions. A retrieving means is provided for performing a retrieving operation on a database of documents in accordance with the retrieval conditions consisting of arbitrary words or arbitrary character strings, and for calculating similarity between retrieved documents picked up by the retrieving operation and the retrieval conditions. A retrieval result storing means is provided for storing the retrieved documents picked up by the retrieving operation. A keyword detecting means is provided for extracting keywords from the retrieved documents picked up by the retrieving operation. An automatic keyword classifying means is provided for automatically classifying the extracted keywords into a plurality of clusters. A classification standard converting means is provided for converting classification standards into retrieval conditions. Each of the classification standards is a set of keywords classified into each cluster. A retrieval result classifying means is provided for classifying a set of the retrieved documents picked up by the retrieving operation in accordance with the classification standards.

Thus, the present invention can provide an automatic document retrieval and classification system so at to assist the intellectual activities during the document retrieval and classification.

According to the preferable embodiments of the present invention, the retrieving means is responsive to the retrieval conditions entered by the user via the input/output means, and executes the retrieving operation on the database of documents in accordance with the retrieval conditions entered by the user. The retrieval result storing means stores the retrieved documents picked up by the retrieving operation of the retrieving means. The keyword detecting means extracts the keywords from the retrieved documents picked up by the retrieving operation. The automatic keyword classifying means automatically classifies the extracted keywords into the plurality of clusters. The classification standard converting means produces converted retrieval conditions resultant from the classification standards each being a set of keywords classified into each cluster. The retrieving means calculates the similarity between the converted retrieval conditions and the retrieved documents picked up by the retrieving operation and stored in the retrieval result storing means. And, the retrieval result classifying means calculates an attribute of each retrieved document picked up by the retrieving operation to each classification standard with reference to the similarity calculated by the retrieving means, thereby performing a document classification.

With this arrangement, it becomes possible to automatically extract the standpoints of classification immanent in the retrieval result without relying on the entry of the classification standards by the user. The users can automatically obtain the classification standpoints not thought by them. No special efforts is required. As a result, it becomes possible to effectively assist the document classification work.

Furthermore, the present invention provides a first document retrieval and classification method comprising a step of performing a retrieving operation on a database of documents in accordance with retrieval conditions entered by a user so as to pick up retrieved documents as intended, a step of allowing the user to input classification standards of a plurality of classifications in response to the retrieved documents picked up by the retrieving operation, a step of converting the classification standards into retrieval conditions, a step of calculating similarity between the converted retrieval conditions resultant from the classification standards and the retrieved documents picked up by the retrieving operation, and a step of calculating an attribute of each retrieved document picked up by the retrieving operation to each classification with reference to the similarity, thereby classifying each retrieved document into a classification having a highest attribute.

With this method, the users can arbitrarily enter the retrieval conditions when they have such words in their minds during the retrieval operation. Furthermore, the users can arbitrarily classify the retrieval result as intended. Thus, the present invention can assist the intellectual activities during the document retrieval and classification.

According to the preferable embodiments of the present invention, when the user inputs a set of arbitrary words or arbitrary character strings for the classification standard of each classification, the entered arbitrary words or arbitrary character strings are converted into retrieval conditions, and the similarity between the converted retrieval conditions and the retrieved documents picked up by the retrieving operation is calculated.

With this method, the users can enter arbitrary words or arbitrary character strings coming up in their minds as the classification standards (i.e., standpoints of classification). Thus, a great flexibility is given in setting the standpoints of classification.

According to the preferable embodiments of the present invention, when the user inputs an arbitrary sentence serving as the classification standard of each classification, keywords are extracted from the sentence, a set of the extracted keywords is converted into retrieval conditions, and the similarity between the converted retrieval conditions and the retrieved documents picked up by the retrieving operation is calculated.

With this method, the users can directly enter an arbitrary sentence belonging to an intended field as the classification standard. This makes it possible to express complicated classification standpoints. Thus, the setting of the standpoints of classification can be flexibly performed with multiple aspects.

According to the preferable embodiments of the present invention, the user designates a plurality of documents among the retrieved documents picked up by the retrieving operation, the designated documents serving as the classification standard of each classification. Then, keywords are extracted from the extracted documents. A set of the extracted keywords is converted into retrieval conditions. And, the similarity between the converted retrieval conditions and the retrieved documents picked up by the retrieving operation is calculated.

With this arrangement, after the users have confirmed the retrieved documents picked up by the retrieving operation, the users can select the retrieved documents themselves or part of them as expressing the standpoints of classification. Thus, the setting of the standpoints of classification can be easily performed.

Moreover, the present invention provides a second document retrieval and classification method comprising a step of performing a retrieving operation on a database of documents in accordance with retrieval conditions entered by a user so as to pick up retrieved documents as intended, a step of extracting keywords from the retrieved documents picked up by the retrieving operation, a step of classifying the extracted keywords into a plurality of clusters, a step of converting a set of the extracted keywords belonging to each cluster into retrieval conditions, a step of calculating similarity between the converted retrieval conditions resultant from the extracted keywords and the retrieved documents picked up by the retrieving operation, and a step of calculating an attribute of each retrieved document picked up by the retrieving operation to each classification with reference to the similarity, thereby classifying each retrieved document into a classification having a highest attribute.

With this method, it becomes possible to automatically extract the standpoints of classification immanent in the retrieval result without relying on the entry of the classification standards by the user. The users can automatically obtain the classification standpoints not thought by them. No special efforts is required. As a result, it becomes possible to effectively assist the document classification work.

## BRIEF DESCRIPTION OF THE DRAWINGS

The above and other objects, features and advantages of the present invention will become more apparent from the following detailed description which is to be read in conjunction with the accompanying drawings, in which:

Fig. 1 is a functional block diagram showing the schematic arrangement of a document retrieval and classification system in accordance with a first embodiment of the present invention;

Fig. 2 is a view showing a retrieval result obtained by the document retrieval and classification system in accordance with the first embodiment of the present invention;

Fig. 3 is a view showing a retrieval result based on classification standards in accordance with the first embodiment of the present invention;

Fig. 4 is a view showing a calculation of the attribute in accordance with the first embodiment of the present invention;

Fig. 5 is a view showing a result of the document classification in accordance with the first embodiment of the present invention;

Fig. 6 is a functional block diagram showing the schematic arrangement of a document retrieval and classification system in accordance with a second embodiment of the present invention; and

Fig. 7 is a functional block diagram showing the schematic arrangement of a document retrieval and classification system in accordance with a third embodiment of the present invention.

DESCRIPTION OF THE PREFERRED EMBODIMENTS

Hereinafter, preferred embodiments of the present invention will be explained with reference to the attached drawings. Identical parts are denoted by the same reference numerals throughout the views. The embodiments of the present invention are based on the documents consisting of Japanese words. Thus, the following explanation includes kanji and/or katakana followed by English translation in brackets.

*First Embodiment*

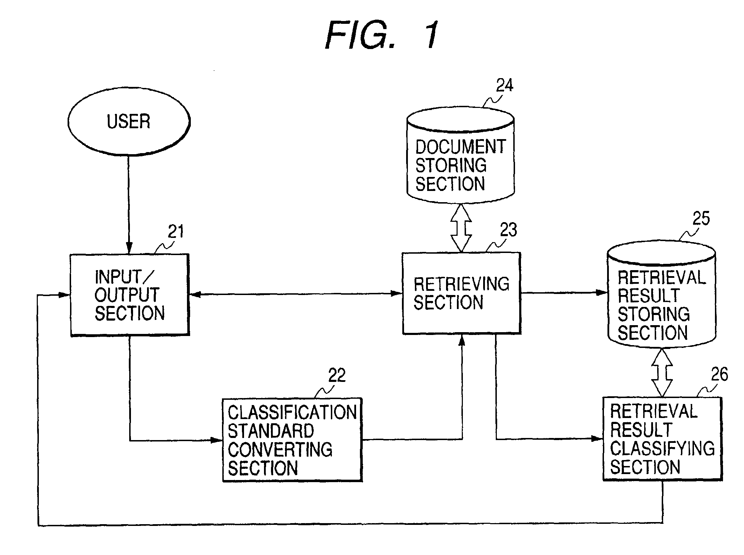

Fig. 1 is a functional block diagram showing the schematic arrangement of a document retrieval and classification system for implementing a document retrieval and classification method in accordance with a first embodiment of the present invention.

In the document retrieval and classification system shown in Fig. 1, an input/output section 21 allows users to input retrieval conditions and classification standards and also outputs retrieval results and classification results. A document storing section 24 stores documents. A retrieving section 23 calculates similarity between retrieved documents and the retrieval conditions. A retrieval result storing section 25 stores retrieval result, such as the retrieved documents. A classification standard converting section 22 receives the classification standards supplied from the input/output section 21 and converts the entered classification standards into retrieval conditions processible in the retrieving section 23. A retrieval result classifying section 26 classifies the retrieved documents in accordance with the classification standards with reference to the similarity calculated by the retrieving section 23.

Details of the document retrieval and classification processing in accordance with the first embodiment will be explained hereinafter.

First, a user inputs retrieval conditions to the input/output section 21. For example, the following logical (Boolean) expression 1 may be given as the retrieval conditions.

(米 OR コメ OR 政策 ) --------------------------- (1)

where 米 is kanji representing rice, コメ is katakana representing rice, and 政策 is kanji representing policy.

The retrieving section 23 retrieves the documents stored in the document storing section 24 based on the retrieval conditions. The retrieving section 23 can perform the retrieval based on retrieval conditions consisting of arbitrary words or arbitrary character strings. Furthermore, the retrieving section 23 can calculate the similarity between the retrieval result and the retrieval conditions.

This kind of retrieving section may incorporate a whole sentence retrieving section capable of detecting all of documents in which a designated word exists, as disclosed in the published Japanese patent application No. 9-319766.

The similarity between the retrieval conditions and the retrieved document (i.e., retrieval result) Dj can be expressed by the following formula.

$$S(Dj) = \Sigma\{fij \times (1 - \log (di/N))\}$$

where Σ is a sum with respect to a variable "i", "fij" represents the frequency (or degree) of occurrence of each word "ti" in the document Dj, "di" represents the number of documents in which the word "ti" appears, and "N" represents the total number of the retrieved documents.

The above formula expresses taking a sum of similarities of respective words "ti" involved in the retrieval conditions.

This is generally referred to as word weighting based on the "TFIDF" method and similarity calculation based on inner product scale.

It is now assumed that, in a certain retrieved document Dj, the retrieval words in the present retrieval conditions have the following frequency of occurrence. Namely, "fij" is given as follows.

米 *(rice (kanji))* 3
コメ *(rice (katakana))* 2
政策 *(policy)* 1

Meanwhile, in all of the documents stored in the document storing section 24, the number of documents involving each retrieval word is as follows. Namely, "di" is given as follows.

米 *(rice (kanji))* 5000
コメ *(rice (katakana))* 1250
政策 *(policy)* 2500

When N=10000, the similarity S(Dj) of Dj is calculated in the following manner.

$$S(Dj) = 3 \times (1\text{-}\log (5000/10000)) + 2 \times (1\text{-}\log (1250/10000)) + 1 \times (1\text{-}\log (2500/10000)) = 6 + 8 + 3 = 17$$

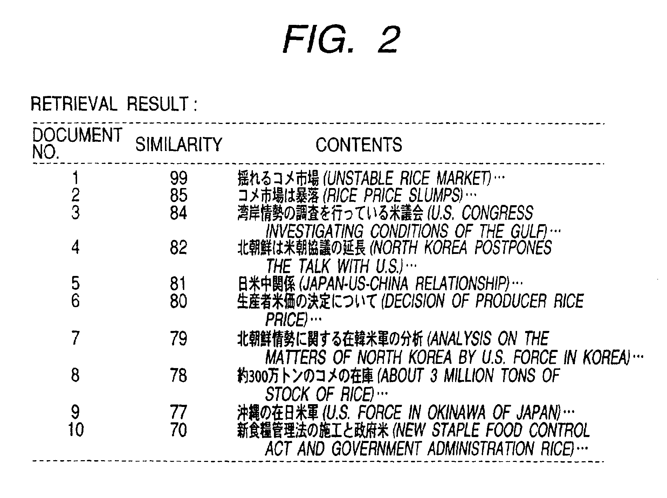

Fig. 2 shows the details of the retrieval result, wherein a document number of each retrieved document is shown together with the similarity and contents of each retrieved document. According to Fig. 2, a total of 10 documents are picked up according to the above-described retrieval conditions and are ranked in order of the similarity. The similarity of each document is normalized by assigning the maximum value to 100. The retrieval result is stored in the retrieval result storing section 25, while the user can know the retrieval result via the input/output section 21.
The user, after taking a look at the retrieval result, can perform a new search or can classify the presently obtained retrieval result.
When the user wants to classify the retrieval result shown in Fig. 2, the user can enter a plurality of classification standards via the input/output section 21. According to the first embodiment, the classification standards are the words expressing the standpoints of classification. For example, the user may input the following words as the classification standards via the input/output section 21.

Classification Standard 1: コメ*(rice; katakana)*, 米価 *(rice price),* 新食糧法 *(new Staple Fool Control Act)*
Classification Standard 2: 北朝鮮 *(North Korea),* 中国 *(China)*, 米朝協議 *(U.S.-North Korea Talk)*
Classification Standard 3: 米国 (U.S.), 米軍 (U.S. *force)*

The classification standard converting section 22 converts the entered classification standards into retrieval conditions processible in the retrieving section 23.
For example, it is preferable to make a logical expression by adequately combining the words entered as the classification standards and then use AND to connect the resultant logical expression with the above logical expression 1 which served as the latest retrieval conditions. The following is examples of the converted retrieval conditions.

Retrieval Condition 1: (コメ OR 米価) AND (米 OR コメ OR 政策)
Retrieval Condition 2: (北朝鮮 OR 中国) AND (米 OR コメ OR 政策)
Retrieval Condition 3: (米国 OR 米軍) AND (米 OR コメ OR 政策)

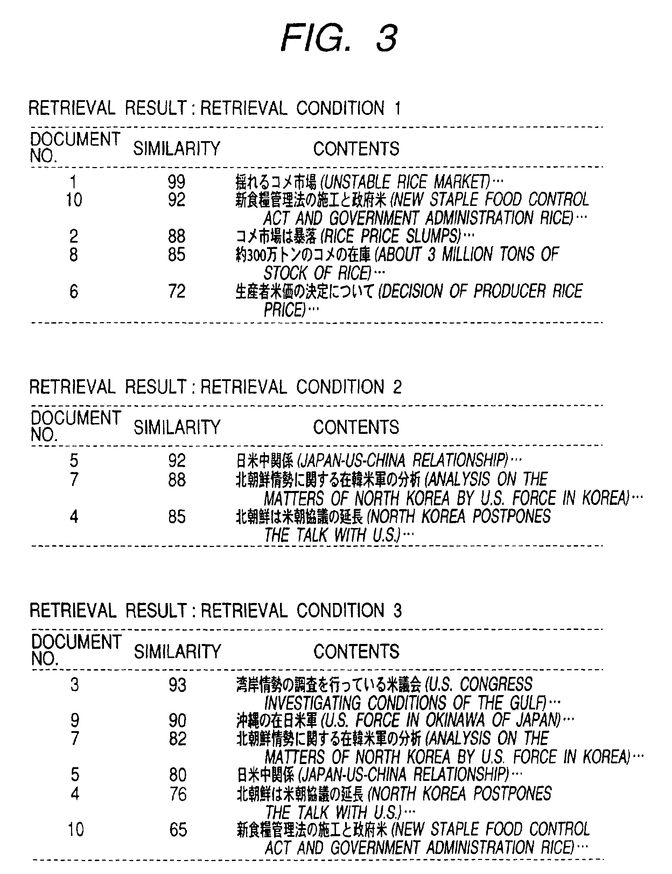

Connecting the latest retrieval conditions (i.e., logical expression 1) with the classification standards by AND is preferable to reduce the scale of the population to be retrieved.
Next, the retrieving section 23 performs the search according to the above-described retrieval conditions 1 to 3, and obtains the retrieval result shown in Fig. 3.
As shown in Fig. 3, the retrieval results obtained by the retrieval conditions 1 to 3 are subsets of the overall set of retrieved documents shown in Fig. 2. In Fig. 3, the similarity attached to each retrieved document shows a calculated similarity value with respect to a corresponding retrieval condition. It is now assumed that S(i, j) represents a similarity of a document "i" to the retrieval condition (i.e., classification standard) "j."
Next, the retrieval result classifying section 26 calculates an attribute T(i, j) of the document "i" to the classification standard "j." For example, the following formula is used to calculate the attribute T(i, j).

$$T(i, j) = C \cdot S(i, j) + (1-C) \cdot 100 \cdot (S(i,j)/\Sigma S(i,k)) \quad (2)$$

where Σ is a sum with respect to a variable "k", and C is a constant in a range 0<C<1.
The above formula 2 is merely an example for obtaining the attribute T(i, j). The method for calculating the attribute T(i, j) is not limited to the formula 2.

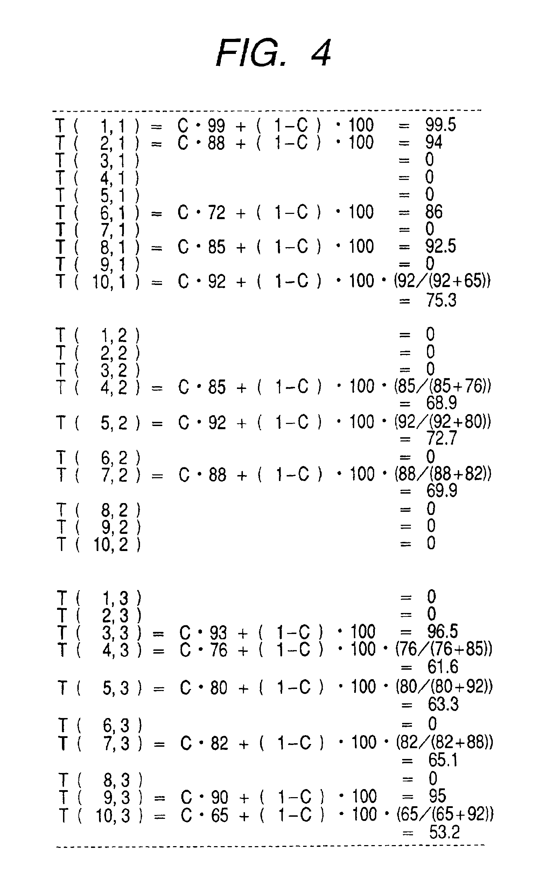

Fig. 4 shows the attribute T(i, j) calculated according to the above formula 2 under a condition that C=0.5 is applied for the documents 1-10 and the classifications 1 to 3.

The retrieval result classifying section 26 uses the following formula 3 to identify a classification having a highest attribute T(i, j) with respect to each document "i."

$$c(i) = \max \{T(i, j)\} \quad (3)$$

where "max" is a maximum value with respect to a variable "j."

Finally, the retrieval result classifying section 26 outputs the conclusion that the document "i" belongs to the classification c(i). This conclusion is shown or notified to the user via the input/output section 21.

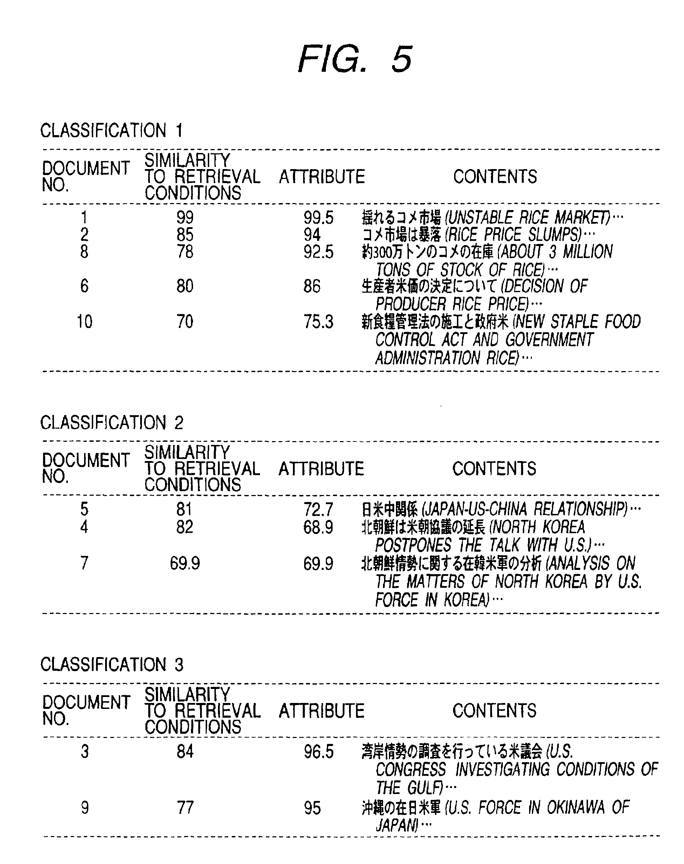

Fig. 5 shows an output example of the finalized classification based on the example shown in Fig. 4.

As explained above, the retrieval result (i.e., an overall set of retrieved documents) shown in Fig. 2 can be classified into a plurality of subsets according to the classification standards 1 to 3 which are words entered by the user.

According to the above example, the kanji"米" is one of retrieval elements given in the logical expression 1. However, the Japanese word"米" has various meanings. Thus, in the retrieved documents shown in Fig. 2, some documents (doc. # 6 and #10) include "米" as representing "rice" while another documents (doc. #3, #4, #5, #7 and #9) include "米" as representing U.S. (i.e., the United States). However, the user can succeed in separating these documents into different classifications by entering appropriate classification standards.

Furthermore, when the user input the retrieval conditions or the classification standards, the user can arbitrarily choose retrieval words without paying special attention to composite words, such as "新食糧法" and "米朝 協議", which are made of a plurality of single words.

Moreover, after the classification is finalized according to the given classification standards, the user can designate a subset corresponding to one classification standard as a new population for another classification (i.e., fine classification).

As described above, the first embodiment of the present invention provides the flexible document retrieval and classification method and system. According to the first embodiment, a retrieving operation is performed on a database of documents in accordance with retrieval conditions entered by a user so as to pick up retrieved documents as intended. The user is allowed to input classification standards of a plurality of classifications in response to the retrieved documents picked up by the retrieving operation. The classification standards are converted into retrieval conditions. The similarity between the converted retrieval conditions resultant from the classification standards and the retrieved documents picked up by the retrieving operation is calculated. And, an attribute of each retrieved document picked up by the retrieving operation to each classification is calculated with reference to the similarity, thereby classifying each retrieved document into a classification having a highest attribute.

According to the first embodiment of the present invention, the users can arbitrarily enter the retrieval conditions when they have such words in their minds during the retrieval operation. Furthermore, the users can arbitrarily classify the retrieval result as intended. Thus, the first embodiment can assist the intellectual activities during the document retrieval and classification.

Furthermore, according to the first embodiment of the present invention, when the user inputs a set of arbitrary words or arbitrary character strings for the classification standard of each classification, the entered arbitrary words or arbitrary character strings are converted into retrieval conditions, and the similarity between the converted retrieval conditions and the retrieved documents picked up by the retrieving operation is calculated.

This makes it possible for the users to enter arbitrary words or arbitrary character strings coming up in their minds as the classification standards (i.e., standpoints of classification). Thus, a great flexibility is given in setting the standpoints of classification.

*Second Embodiment*

A second embodiment provides a document retrieval and classification system characterized in that the classification standards are selected from sentences expressing the standpoints of classification.

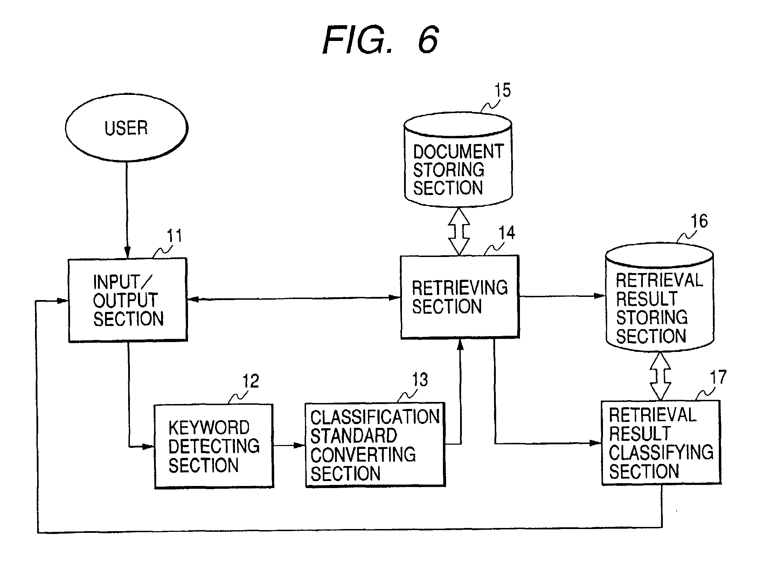

Fig. 6 shows a functional block diagram showing the schematic arrangement of a document retrieval and classification system in accordance with the second embodiment of the present invention.

In the document retrieval and classification system shown in Fig. 6, an input/output section 11 allows users to input retrieval conditions and classification standards and also outputs retrieval results and classification results. A document storing section 15 stores documents. A retrieving section 14 calculates similarity between retrieved documents and the retrieval conditions. A retrieval result storing section 16 stores retrieval result, such as the retrieved documents. A keyword detecting section 12 receives the sentence expressing the standpoints of classification which is entered by the user via the input/output section 11, and detects keywords from the received sentence. The detected

keywords serve as classification standards. A classification standard converting section 13 receives the keywords (i.e., classification standards) sent from the keyword detecting section 12, and converts the entered keywords into retrieval conditions processible in the retrieving section 14. A retrieval result classifying section 17 classifies the retrieved documents in accordance with the classification standards with reference to the similarity calculated by the retrieving section 14.

Details of the document retrieval and classification processing in accordance with the second embodiment will be explained hereinafter.

First, a user inputs retrieval conditions to the input/output section 11. It is now assumed that, like the first embodiment, the retrieval conditions defined by the logical expression 1 is entered. And, the retrieval result shown in Fig. 2 is obtained.

When the user wants to classify the retrieval result shown in Fig. 2, the user can enter a plurality of classification standards via the input/output section 11. According to the second embodiment, the classification standards are the sentences expressing the standpoints of classification, reference numbers identifying the retrieved documents, or essential part of the retrieved documents.

For example, the user may input the following sentences as the classification standards via the input/output section 11.

Classification Standard 4:コメ市場や政府の米価政策について *(Regarding the rice market and the rice price policy of the government)*
Classification Standard 5: 北朝鮮や中国などに対する米国の対応 *(Attitude of U.S. against North Korea and China)*
Classification Standard 6: 韓国や日本における米軍問題 *(Problems of U.S. forces in Korea and Japan)*

In response to the entry of such sentences, the document retrieval and classification system of the second embodiment implements the following processing.

The keyword detecting section 12 extracts words appearing in each sentence by using a dictionary database (not shown) based on the morphologic analysis, and chooses keywords (i.e., essential words) of each sentence.

Regarding the selection of keywords of each sentence, it is desirable to check the frequency (or degree) of occurrence of each word in all the documents stored in the document storing section 15 in advance, and then the keywords are selected based on the "TFIDF" word weighting method or the like. Such a word weighting method is, for example, disclosed in "Word Weighting Principle Based on Frequency-of-occurrence Information", by Umino, Library and information Science, No. 26 (1988).

Furthermore, as another method for selecting the keywords, it is preferable for Japanese documents to consider the difference of character types, such as katakana, hiragana, and kanji, in extracting the words (i.e., character strings) from the sentences. This is effective to detect novel words or composite words not registered in the dictionary.

Needless to say, it is preferable to adequately combine the above two methods.

According to the second embodiment, the keywords of each sentence are chosen with reference to the dictionary database. It is now assumed that the following words are extracted from the above-described classification standards 4 to 6.

Classification Standard 4':コメ *(rice),* 市場 *(market),* 政府 *(government),* 米価政策 *(rice price policy)*
Classification Standard 5':北朝鮮 *(North Korea)*, 中国 *(China)*, 米国 *(U.S.)*
Classification Standard 6':韓国 *(Korea),* 日本 *(Japan),* 米軍 (*U.S. force),* 問題 *(Problem)*

Thereafter, the classification standard converting section 13 converts the classification standards 4' to 6' into retrieval conditions processible in the retrieving section 14 in the same manner as the processing performed in the classification standard converting section 22 of the first embodiment.

Furthermore, it is possible for the user, after taking a look at the retrieval result shown in Fig. 2, to designate document numbers of the retrieved documents as the classification standards in the following manner.

Classification Standard 7: 1, 2
Classification Standard 8: 4, 5
Classification Standard 9: 9

In response to the entry of such reference numbers, the document retrieval and classification system of the second embodiment implements the following processing.

The keyword detecting section 12 reads the texts of the documents designated by the reference numbers (i.e., classification standards) from the document storing section 15, and extracts keywords involved in the designated documents.

The extraction of keywords can be performed in the same manner as in the above-described example which extract the keywords from the sentences. Alternatively, it is preferable to extract keywords from each document in advance and store the extracted keywords together with the corresponding documents in the document storing section 15. In this case, the keyword detecting section 12 reads the keywords stored in the document storing section 15 with reference to the reference numbers of the designated documents (i.e., classification standards).

It is now assumed that the following words are extracted from the above-described classification standards 7 to 9.

Classification Standard 7':コメ *(rice),* 備蓄 *(stock),* 食糧 *(food),* 米価 *(rice price),* 農協 *(agricultural cooperative association),* 生産 *(product),* 農家 *(farmer),* 稲作 *(rice crop),* 消費者 *(consumer),* 米 *(rice)*

Classification Standard 8': 北朝鮮 *(North Korea)*, 会談 *(conference),* 韓国 *(Korea)*, 協議 (*talk*), 米 *(U.S.)*, 米韓 (*U.S. -Korea*), 問題 *(problem),* 南北 *(north-south),* 朝鮮半島 *(Korean Peninsula)*, 米軍 (*U.S. force)*

Classification Standard 9': 沖縄 *(Okinawa)*, 米国 *(U.S.)*, 連邦 *(Federation),* 調査 *(investigation),* 返還 *(return),* 公文書 *(official document),* 資料 *(material),* 仮処分 *(provisional disposition),* 地裁 *(district court),* 決定 *(decision)*

Thereafter, the classification standard converting section 13 converts the classification standards 7' to 9' into retrieval conditions processible in the retrieving section 14 in the same manner as the processing performed in the classification standard converting section 22 of the first embodiment.

After completing the conversion of the classification standards into the retrieval conditions, the document retrieval and classification system of the second embodiment implements the same processing as that disclosed in the first embodiment.

As explained above, the retrieval result (i.e., an overall set of retrieved documents) shown in Fig. 2 can be classified into a plurality of subsets according to the classification standards 4 to 6 (or 7 to 9) which are sentences expressing standpoints of classification, reference numbers identifying the retrieved documents, or essential part of the retrieved documents entered by the user. Thus, it becomes possible for the user to perform the classification in various ways. For example, the user can flexibly and selectively use complicated standpoints or simplified standpoints in classifying the retrieved documents.

As described above, according to the second embodiment of the present invention, when the user inputs an arbitrary sentence serving as the classification standard of each classification, keywords are extracted from the sentence, a set of the extracted keywords is converted into retrieval conditions, and the similarity between the converted retrieval conditions and the retrieved documents picked up by the retrieving operation is calculated.

According to the second embodiment of the present invention, the users can directly enter an arbitrary sentence belonging to an intended field as the classification standard. This makes it possible to express complicated classification standpoints. Thus, the setting of the standpoints of classification can be flexibly performed with multiple aspects.

Furthermore, according to the second embodiment of the present invention, the user designates a plurality of documents among the retrieved documents picked up by the retrieving operation, the designated documents serving as the classification standard of each classification. Then, keywords are extracted from the extracted documents. A set of the extracted keywords is converted into retrieval conditions. And, the similarity between the converted retrieval conditions and the retrieved documents picked up by the retrieving operation is calculated.

After the users have confirmed the retrieved documents picked up by the retrieving operation, the users can select the retrieved documents themselves or part of them as expressing the standpoints of classification. Thus, the setting of the standpoints of classification can be easily performed.

*Third Embodiment*

A third embodiment provides a document retrieval and classification system characterized in that the classification standards are automatically determined and the retrieved documents are automatically classified.

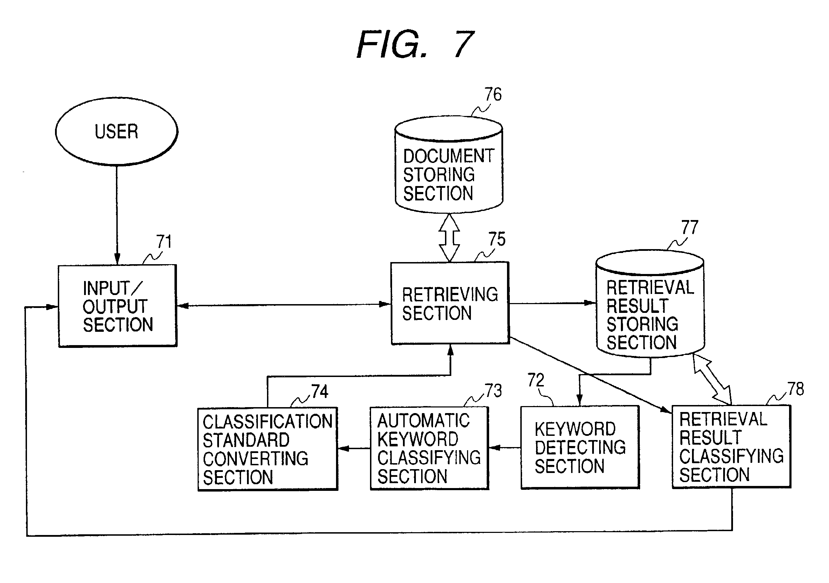

Fig. 7 shows a functional block diagram showing the schematic arrangement of the document retrieval and classification system in accordance with the third embodiment of the present invention.

In the document retrieval and classification system shown in Fig. 7, an input/output section 71 allows users to input retrieval conditions and classification standards and also outputs retrieval results and classification results. A document storing section 76 stores documents. A retrieving section 75 calculates similarity between retrieved documents and the retrieval conditions. A retrieval result storing section 77 stores retrieval result, such as the retrieved documents. A keyword detecting section 72 detects keywords from the retrieved documents stored in the retrieval result storing section 77. An automatic keyword classifying section 73 classifies a set of detected keywords into a plurality of clusters. The classified keywords in each cluster serve as classification standards. A classification standard

converting section 74 receives the keywords (i.e., classification standards) sent from the automatic keyword classifying section 73, and converts the entered keywords into retrieval conditions processible in the retrieving section 75. A retrieval result classifying section 78 classifies the retrieved documents in accordance with the classification standards with reference to the similarity calculated by the retrieving section 75.

Details of the document retrieval and classification processing in accordance with the third embodiment will be explained hereinafter.

First, a user inputs retrieval conditions to the input/output section 71. It is now assumed that, like the first embodiment, the retrieval conditions defined by the logical expression 1 is entered. And, the retrieval result shown in Fig. 2 is obtained.

The third embodiment differs from the above-described first and second embodiments in that the classification standards are automatically determined without relying on the entry of the classification standards by the user.

Hereinafter, the automatic classification in accordance with the third embodiment will be explained in detail. First, the keyword detecting section 72 detects keywords of each retrieved document stored in the retrieval result storing section 77. Details of the extraction of keywords is disclosed in the above-described second embodiment of the present invention. It is also possible to use a keyword extracting method disclosed in the published Japanese patent application No. 9-176822.

Next, the automatic keyword classifying section 73 classifies a set of detected keywords into a plurality of subsets. Regarding the automatic keyword classification, the following method is employed.

It is now assumed that the document storing section 76 stores a total of n documents D1 to Dn, in which a total of m words W1 to Wm appear respectively.

In this case, the following $n^{th}$-order vector Vj can be introduced for each word Wj.

$$Vj = (e1, e2, e3, ---------, en)$$

The following formula 4 shows a calculation of each vector element ei (i=1, ----, n).

$$ei = TFi(Wj) \times \log (n/DF(Wj)) \quad (4)$$

where TFi(Wj) represents the frequency (or degree) of occurrence of the word Wj in the document Di, and DF(Wj) represents the number of documents in which the word Wj appears.

It is preferable that the vector Vj is normalized so that its length becomes 1.

In this manner, vectors V1 to Vm can be obtained for the m words, respectively.

Next, a plurality of word groups G1 to Gp are considered. Each word group consists of specific words frequently appearing in documents of a specific field. Each word group can be manually produced, or automatically produced by utilizing distribution of occurrence of words in a dictionary or a large-scale document.

In this case, the following $n^{th}$-order vector VGk can be introduced for each word group Gk.

$$VGk = (e'1, e'2, e'3, -----, e'n)$$

The following formula 5 shows a calculation of each vector element e'i (i=1, ----, n).

$$e'i = TFi(Gj) \times \log (n/DF(Gj)) \quad (5)$$

where TFi(Gj) represents a total number of the frequency (or degree) of occurrence of words belonging to the group Gj in the document Di, and DF(Gj) represents the number of documents in which any word belonging to the group Dj appears.

It is preferable that the vector VGk is normalized so that its length becomes 1.

In this manner, vectors VG1 to VGp can be obtained for the p word groups, respectively.

The similarity Sjk between each word Wj and the word group Gk can be obtained by an inner product of the vector Vj and vector VGk.

Using the above vectors and the similarity calculation make it easy to realize the automatic classification of keywords. For example, it is now assumed that there are three word groups G1, G2 and G3 frequently used in the following fields.

G1: Internal Combustion Engine for Automotive Vehicles
G2: Aircraft Accident
G3: Internet

The retrieving section 75 retrieves the documents relating to "Engine." Then, the keyword detecting section 72 extracts the following keywords.

ガソリン*(gasoline)*, 事故*(accident)*, WWW, 燃費*(fuel consumption),*検索*(retrieval)*, 爆発*(Explosion)*,空港*(Airport)*, URL

The similarity of each word to respective word groups G1, G2 and G3 is calculated in the following manner.

S (ガソリン*(gasoline)*) = (0.8, 0.0, 0.2)
S (事故*(accident)*) = (0.2, 0.6, 0.3)
S (WWW) = (0.1, 0.2, 0.8)
S (燃費*(fuel consumption))* = (0.7, 0.1, 0.2)
S (検索 *(retrieval)*) = (0.0, 0.2, 0.6)
S (爆発 (*Explosion)*) = (0.4, 0.6, 0.1)
S (空港 *(Airport)*) = (0.0, 0.9, 0.2)
S (URL) = (0.1, 0.0, 0.9)

It is then regarded that each keyword belongs to a word group having the highest similarity. Accordingly, all of the extracted keywords are classified into respective word groups G1, G2 and G3 in the following manner.

G1: ガソリン*(gasoline)*, 燃費 (*fuel consumption)*
G2: 事故(*accident*), 爆発 *(Explosion), * 空港 *(Airport)*
G3: WWW, 検索(*retrieval*), URL

The keyword groups thus obtained by the automatic keyword classifying section 73 are entered into the classification standard converting section 74.
When the number of word groups G is large (e.g., 100), or when the number of keyword groups serving as the classification standards needs to be reduced (e.g., 2), the automatic keyword classifying section 73 operates in the following manner.

* 1st step -- taking a sum of weighting values of classified keywords for each word group G, and then regarding the obtained sum as a score of this word group.
* 2nd step -- select a predetermined number of groups successively considering the highest value of the score.

According to the above example,

Score of G1: 0.8 + 0.7 = 1.5

Score of G2: 0.6+0.6+0.9 = 2.1

Score of G3: 0.8+0.6+0.9 = 2.3

Accordingly, when the number of keyword groups needs to be reduced to 2, the automatic keyword classifying section 73 selects the groups G2 and G3 considering the score of each word group.
When the automatic keyword classifying section 73 performs the above-described processing, a set of keywords extracted from the retrieved documents can be automatically classified into a plurality of groups. According to the above example, the following classification standards are obtained.

Classification Standard 10: ガソリン *(gasoline)*, 燃費*(fuel consumption)*
Classification Standard 11: 事故*(accident)*, 爆発*(Explosion)*, 空港 *(Airport)*
Classification Standard 12: WWW, 検索*(retrieval)*, URL

Thereafter, the classification standard converting section 74 converts the classification standards 10 to 12 into retrieval conditions processible in the retrieving section 75 in the same manner as the processing performed in the classification standard converting section 22 of the first embodiment.

After completing the conversion of the classification standards into the retrieval conditions, the document retrieval and classification system of the third embodiment implements the same processing as that disclosed in the first embodiment.

As explained above, the third embodiment automatically judges the field of the words frequently appearing in the retrieved documents. The detected fields are regarded as the classification standards. Thus, it becomes possible to perform the document classification according to the nature of retrieval result. In other words, the third embodiment provides a simplified document classification.

The keyword groups obtained by the automatic keyword classifying section 73 can be once shown to the user via the input/output section 71. The user can modify or correct the indicated keyword groups. Then, the classification standard converting section 74 converts the modified keyword groups (i.e., modified classification standards) into retrieval conditions. Such classifying processing makes it possible to let the user know the classification standpoints not thought by the user. As a result, the third embodiment effectively assists the document classification work.

As described above, the third embodiment of the present invention provides the automatic document retrieval and classification method and system. A retrieving operation is performed on a database of documents in accordance with retrieval conditions entered by a user so as to pick up retrieved documents as intended. Keywords are extracted from the retrieved documents picked up by the retrieving operation. The extracted keywords are classified into a plurality of clusters. A set of the extracted keywords belonging to each cluster is converted into retrieval conditions. The similarity between the converted retrieval conditions resultant from the extracted keywords and the retrieved documents picked up by the retrieving operation is calculated. And, an attribute of each retrieved document picked up by the retrieving operation to each classification is calculated with reference to the similarity, thereby classifying each retrieved document into a classification having a highest attribute.

According to the third embodiment of the present invention, it becomes possible to automatically extract the standpoints of classification immanent in the retrieval result without relying on the entry of the classification standards by the user. The users can automatically obtain the classification standpoints not thought by them. No special efforts is required. As a result, it becomes possible to effectively assist the document classification work.

This invention may be embodied in several forms without departing from the spirit of essential characteristics thereof. The present embodiments as described are therefore intended to be only illustrative and not restrictive, since the scope of the invention is defined by the appended claims rather than by the description preceding them. All changes that fall within the metes and bounds of the claims, or equivalents of such metes and bounds, are therefore intended to be embraced by the claims.

## Claims

**1.** A document retrieval and classification system comprising:

input/output means (21; 11) for allowing a user to enter retrieval conditions and classification standards;
retrieving means (23; 14) for performing a retrieving operation on a database of documents in accordance with said retrieval conditions consisting of arbitrary words or arbitrary character strings, and for calculating similarity between retrieved documents picked up by the retrieving operation and said retrieval conditions;
retrieval result storing means (25; 16) for storing said retrieved documents picked up by the retrieving operation;
classification standard converting means (22; 13) for converting the classification standards into retrieval conditions, said classification standards being expressed as a set of arbitrary words or arbitrary character strings; and
retrieval result classifying means (26; 17) for classifying said retrieved documents picked up by the retrieving operation in accordance with the plurality of classification standards.

**2.** The document retrieval and classification system in accordance with claim 1, wherein

said retrieving means (23) is responsive to the retrieval conditions entered by the user via said input/output means (21), and executes the retrieving operation on the database of documents in accordance with the retrieval conditions entered by the user,
said retrieval result storing means (25) stores the retrieved documents picked up by the retrieving operation of said retrieving means,
said classification standard converting means (22) is responsive to a plurality of classification standards entered by the user via said input/output means and produces converted retrieval conditions resultant from the entered classification standards,
said retrieving means (23) calculates the similarity between the converted retrieval conditions and the retrieved documents picked up by the retrieving operation and stored in said retrieval result storing means, and
said retrieval result classifying means (26) calculates an attribute of each retrieved document picked up by the retrieving operation to each classification standard with reference to said similarity calculated by said retrieving means, thereby performing a document classification.

**3.** The document retrieval and classification system in accordance with claim 1, wherein

said input/output means (21) allows the user to input a plurality of classification standards each consisting of a set of arbitrary words or arbitrary character strings, and
said classification standard converting means (22) converts said set of arbitrary words or arbitrary character strings into retrieval conditions.

**4.** The document retrieval and classification system in accordance with claim 1, further comprising

keyword detecting means (12) for extracting keywords from an arbitrary sentence or document,
wherein said keyword detecting means (12) is responsive to a plurality of classification standards expressed by an arbitrary sentence entered by the user via said input/output means (11) and extracts keywords from said entered sentences, and
said classification standard converting means (13) converts a set of the extracted keywords into retrieval conditions.

**5.** The document retrieval and classification system in accordance with claim 1, wherein

said input/output means (11) allows the user to designate a plurality of documents serving as a plurality of classification standards, said designated documents being selected from the retrieved documents picked up by the retrieving operation,
said keyword detecting means (12) extracts keywords from said designated documents, and
said classification standard converting means (13) converts a set of the extracted keywords into retrieval conditions.

**6.** A document retrieval and classification system comprising:

input/output means (71) for allowing a user to enter retrieval conditions;
retrieving means (75) for performing a retrieving operation on a database of documents in accordance with said retrieval conditions consisting of arbitrary words or arbitrary character strings, and for calculating similarity between retrieved documents picked up by the retrieving operation and said retrieval conditions;
retrieval result storing means (77) for storing said retrieved documents picked up by the retrieving operation;
keyword detecting means (72) for extracting keywords from said retrieved documents picked up by the retrieving operation;
automatic keyword classifying means (73) for automatically classifying the extracted keywords into a plurality of clusters;
classification standard converting means (74) for converting classification standards into retrieval conditions, each of said classification standards being a set of keywords classified into each cluster; and
retrieval result classifying means (78) for classifying a set of said retrieved documents picked up by the retrieving operation in accordance with said classification standards.

**7.** The document retrieval and classification system in accordance with claim 6, wherein

said retrieving means (75) is responsive to the retrieval conditions entered by the user via said input/output means (71), and executes the retrieving operation on the database of documents in accordance with said retrieval conditions entered by the user,
said retrieval result storing means (77) stores the retrieved documents picked up by the retrieving operation of said retrieving means,
said keyword detecting means (72) extracts the keywords from the retrieved documents picked up by the retrieving operation,

said automatic keyword classifying means (73) automatically classifies the extracted keywords into the plurality of clusters,
said classification standard converting means (74) produces converted retrieval conditions resultant from the classification standards each being a set of keywords classified into each cluster,
said retrieving means (75) calculates the similarity between the converted retrieval conditions and the retrieved documents picked up by the retrieving operation and stored in said retrieval result storing means, and
said retrieval result classifying means (78) calculates an attribute of each retrieved document picked up by the retrieving operation to each classification standard with reference to said similarity calculated by said retrieving means, thereby performing a document classification.

**8.** A document retrieval and classification method comprising the steps of:

performing a retrieving operation on a database of documents in accordance with retrieval conditions entered by a user so as to pick up retrieved documents as intended;
allowing the user to input classification standards of a plurality of classifications in response to said retrieved documents picked up by the retrieving operation;
converting said classification standards into retrieval conditions;
calculating similarity between the converted retrieval conditions resultant from said classification standards and the retrieved documents picked up by the retrieving operation; and
calculating an attribute of each retrieved document picked up by the retrieving operation to each classification with reference to said similarity, thereby classifying each retrieved document into a classification having a highest attribute.

**9.** The document retrieval and classification method in accordance with claim 8, wherein

when the user inputs a set of arbitrary words or arbitrary character strings for the classification standard of each classification,
the entered arbitrary words or arbitrary character strings are converted into retrieval conditions, and
the similarity between the converted retrieval conditions and the retrieved documents picked up by the retrieving operation is calculated.

**10.** The document retrieval and classification method in accordance with claim 8, wherein

when the user inputs an arbitrary sentence serving as the classification standard of each classification,
keywords are extracted from said sentence,
a set of the extracted keywords is converted into retrieval conditions, and
the similarity between the converted retrieval conditions and the retrieved documents picked up by the retrieving operation is calculated.

**11.** The document retrieval and classification method in accordance with claim 8, wherein

when the user designates a plurality of documents among said retrieved documents picked up by the retrieving operation, said designated documents serving as the classification standard of each classification,
keywords are extracted from the extracted documents,
a set of the extracted keywords is converted into retrieval conditions, and
the similarity between the converted retrieval conditions and the retrieved documents picked up by the retrieving operation is calculated.

**12.** A document retrieval and classification method comprising the steps of:

performing a retrieving operation on a database of documents in accordance with retrieval conditions entered by a user so as to pick up retrieved documents as intended;
extracting keywords from said retrieved documents picked up by the retrieving operation;
classifying the extracted keywords into a plurality of clusters;
converting a set of said extracted keywords belonging to each cluster into retrieval conditions;
calculating similarity between the converted retrieval conditions resultant from said extracted keywords and the retrieved documents picked up by the retrieving operation; and
calculating an attribute of each retrieved document picked up by the retrieving operation to each classification

with reference to said similarity, thereby classifying each retrieved document into a classification having a highest attribute.

FIG. 1

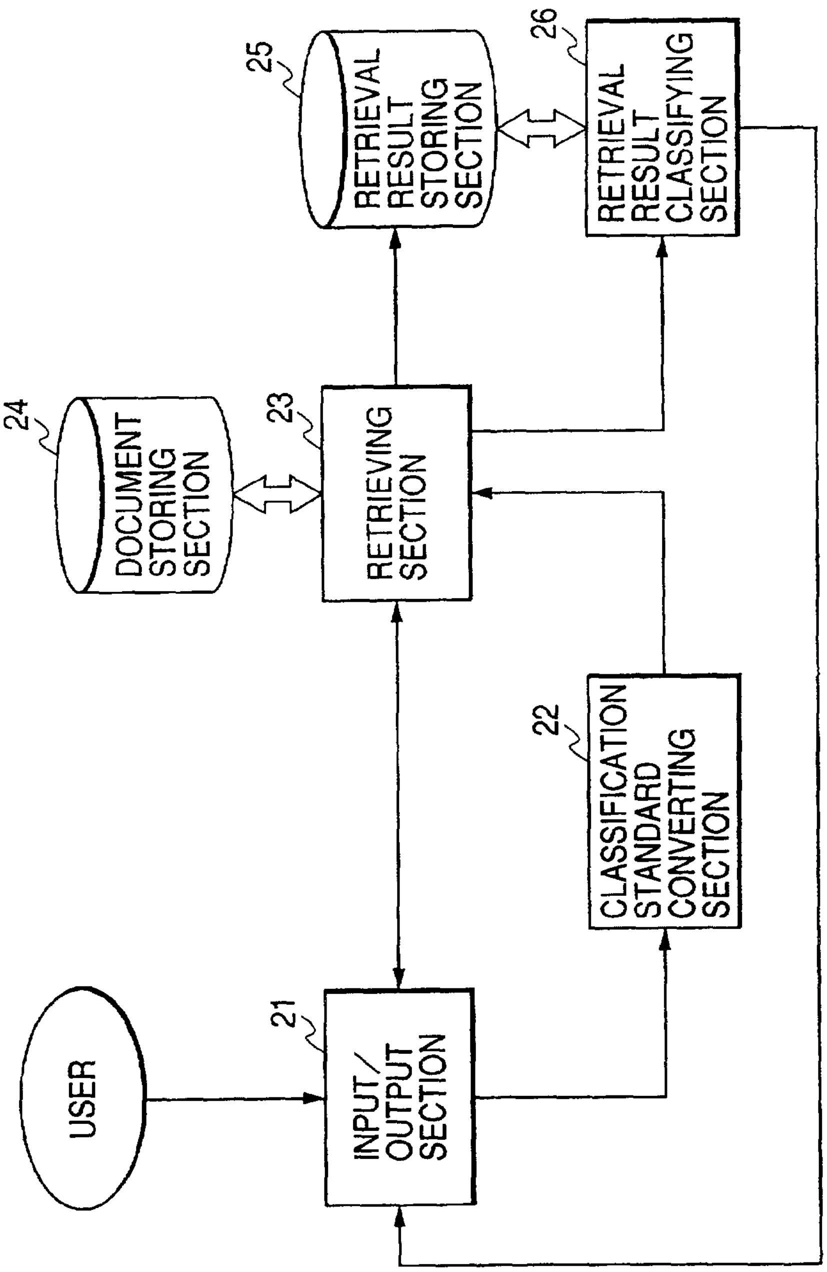
USER
21
INPUT/
OUTPUT
SECTION
22
CLASSIFICATION
STANDARD
CONVERTING
SECTION
23
RETRIEVING
SECTION
24
DOCUMENT
STORING
SECTION
25
RETRIEVAL
RESULT
STORING
SECTION
26
RETRIEVAL
RESULT
CLASSIFYING
SECTION

# *FIG. 2*

RETRIEVAL RESULT :

| DOCUMENT NO. | SIMILARITY | CONTENTS |
|---|---|---|
| 1 | 99 | 揺れるコメ市場 *(UNSTABLE RICE MARKET)*… |
| 2 | 85 | コメ市場は暴落 *(RICE PRICE SLUMPS)*… |
| 3 | 84 | 湾岸情勢の調査を行っている米議会 *(U.S. CONGRESS INVESTIGATING CONDITIONS OF THE GULF)*… |
| 4 | 82 | 北朝鮮は米朝協議の延長 *(NORTH KOREA POSTPONES THE TALK WITH U.S.)*… |
| 5 | 81 | 日米中関係 *(JAPAN-US-CHINA RELATIONSHIP)*… |
| 6 | 80 | 生産者米価の決定について *(DECISION OF PRODUCER RICE PRICE)*… |
| 7 | 79 | 北朝鮮情勢に関する在韓米軍の分析 *(ANALYSIS ON THE MATTERS OF NORTH KOREA BY U.S. FORCE IN KOREA)*… |
| 8 | 78 | 約300万トンのコメの在庫 *(ABOUT 3 MILLION TONS OF STOCK OF RICE)*… |
| 9 | 77 | 沖縄の在日米軍 *(U.S. FORCE IN OKINAWA OF JAPAN)*… |
| 10 | 70 | 新食糧管理法の施工と政府米 *(NEW STAPLE FOOD CONTROL ACT AND GOVERNMENT ADMINISTRATION RICE)*… |

# FIG. 3

RETRIEVAL RESULT : RETRIEVAL CONDITION 1

| DOCUMENT NO. | SIMILARITY | CONTENTS |
|---|---|---|
| 1 | 99 | 揺れるコメ市場 *(UNSTABLE RICE MARKET)*··· |
| 10 | 92 | 新食糧管理法の施工と政府米 *(NEW STAPLE FOOD CONTROL ACT AND GOVERNMENT ADMINISTRATION RICE)*··· |
| 2 | 88 | コメ市場は暴落 *(RICE PRICE SLUMPS)*··· |
| 8 | 85 | 約300万トンのコメの在庫 *(ABOUT 3 MILLION TONS OF STOCK OF RICE)*··· |
| 6 | 72 | 生産者米価の決定について *(DECISION OF PRODUCER RICE PRICE)*··· |

RETRIEVAL RESULT : RETRIEVAL CONDITION 2

| DOCUMENT NO. | SIMILARITY | CONTENTS |
|---|---|---|
| 5 | 92 | 日米中関係 *(JAPAN-US-CHINA RELATIONSHIP)*··· |
| 7 | 88 | 北朝鮮情勢に関する在韓米軍の分析 *(ANALYSIS ON THE MATTERS OF NORTH KOREA BY U.S. FORCE IN KOREA)*··· |
| 4 | 85 | 北朝鮮は米朝協議の延長 *(NORTH KOREA POSTPONES THE TALK WITH U.S.)*··· |

RETRIEVAL RESULT : RETRIEVAL CONDITION 3

| DOCUMENT NO. | SIMILARITY | CONTENTS |
|---|---|---|
| 3 | 93 | 湾岸情勢の調査を行っている米議会 *(U.S. CONGRESS INVESTIGATING CONDITIONS OF THE GULF)*··· |
| 9 | 90 | 沖縄の在日米軍 *(U.S. FORCE IN OKINAWA OF JAPAN)*··· |
| 7 | 82 | 北朝鮮情勢に関する在韓米軍の分析 *(ANALYSIS ON THE MATTERS OF NORTH KOREA BY U.S. FORCE IN KOREA)*··· |
| 5 | 80 | 日米中関係 *(JAPAN-US-CHINA RELATIONSHIP)*··· |
| 4 | 76 | 北朝鮮は米朝協議の延長 *(NORTH KOREA POSTPONES THE TALK WITH U.S.)*··· |
| 10 | 65 | 新食糧管理法の施工と政府米 *(NEW STAPLE FOOD CONTROL ACT AND GOVERNMENT ADMINISTRATION RICE)*··· |

# FIG. 4

$$T(1,1) = C \cdot 99 + (1-C) \cdot 100 = 99.5$$
$$T(2,1) = C \cdot 88 + (1-C) \cdot 100 = 94$$
$$T(3,1) = 0$$
$$T(4,1) = 0$$
$$T(5,1) = 0$$
$$T(6,1) = C \cdot 72 + (1-C) \cdot 100 = 86$$
$$T(7,1) = 0$$
$$T(8,1) = C \cdot 85 + (1-C) \cdot 100 = 92.5$$
$$T(9,1) = 0$$
$$T(10,1) = C \cdot 92 + (1-C) \cdot 100 \cdot (92/(92+65)) = 75.3$$

$$T(1,2) = 0$$
$$T(2,2) = 0$$
$$T(3,2) = 0$$
$$T(4,2) = C \cdot 85 + (1-C) \cdot 100 \cdot (85/(85+76)) = 68.9$$
$$T(5,2) = C \cdot 92 + (1-C) \cdot 100 \cdot (92/(92+80)) = 72.7$$
$$T(6,2) = 0$$
$$T(7,2) = C \cdot 88 + (1-C) \cdot 100 \cdot (88/(88+82)) = 69.9$$
$$T(8,2) = 0$$
$$T(9,2) = 0$$
$$T(10,2) = 0$$

$$T(1,3) = 0$$
$$T(2,3) = 0$$
$$T(3,3) = C \cdot 93 + (1-C) \cdot 100 = 96.5$$
$$T(4,3) = C \cdot 76 + (1-C) \cdot 100 \cdot (76/(76+85)) = 61.6$$
$$T(5,3) = C \cdot 80 + (1-C) \cdot 100 \cdot (80/(80+92)) = 63.3$$
$$T(6,3) = 0$$
$$T(7,3) = C \cdot 82 + (1-C) \cdot 100 \cdot (82/(82+88)) = 65.1$$
$$T(8,3) = 0$$
$$T(9,3) = C \cdot 90 + (1-C) \cdot 100 = 95$$
$$T(10,3) = C \cdot 65 + (1-C) \cdot 100 \cdot (65/(65+92)) = 53.2$$

# FIG. 5

CLASSIFICATION 1

| DOCUMENT NO. | SIMILARITY TO RETRIEVAL CONDITIONS | ATTRIBUTE | CONTENTS |
|---|---|---|---|
| 1 | 99 | 99.5 | 揺れるコメ市場 *(UNSTABLE RICE MARKET)*… |
| 2 | 85 | 94 | コメ市場は暴落 *(RICE PRICE SLUMPS)*… |
| 8 | 78 | 92.5 | 約300万トンのコメの在庫 *(ABOUT 3 MILLION TONS OF STOCK OF RICE)*… |
| 6 | 80 | 86 | 生産者米価の決定について *(DECISION OF PRODUCER RICE PRICE)*… |
| 10 | 70 | 75.3 | 新食糧管理法の施工と政府米 *(NEW STAPLE FOOD CONTROL ACT AND GOVERNMENT ADMINISTRATION RICE)*… |

CLASSIFICATION 2

| DOCUMENT NO. | SIMILARITY TO RETRIEVAL CONDITIONS | ATTRIBUTE | CONTENTS |
|---|---|---|---|
| 5 | 81 | 72.7 | 日米中関係 *(JAPAN-US-CHINA RELATIONSHIP)*… |
| 4 | 82 | 68.9 | 北朝鮮は米朝協議の延長 *(NORTH KOREA POSTPONES THE TALK WITH U.S.)*… |
| 7 | 69.9 | 69.9 | 北朝鮮情勢に関する在韓米軍の分析 *(ANALYSIS ON THE MATTERS OF NORTH KOREA BY U.S. FORCE IN KOREA)*… |

CLASSIFICATION 3

| DOCUMENT NO. | SIMILARITY TO RETRIEVAL CONDITIONS | ATTRIBUTE | CONTENTS |
|---|---|---|---|
| 3 | 84 | 96.5 | 湾岸情勢の調査を行っている米議会 *(U.S. CONGRESS INVESTIGATING CONDITIONS OF THE GULF)*… |
| 9 | 77 | 95 | 沖縄の在日米軍 *(U.S. FORCE IN OKINAWA OF JAPAN)*… |

FIG. 6

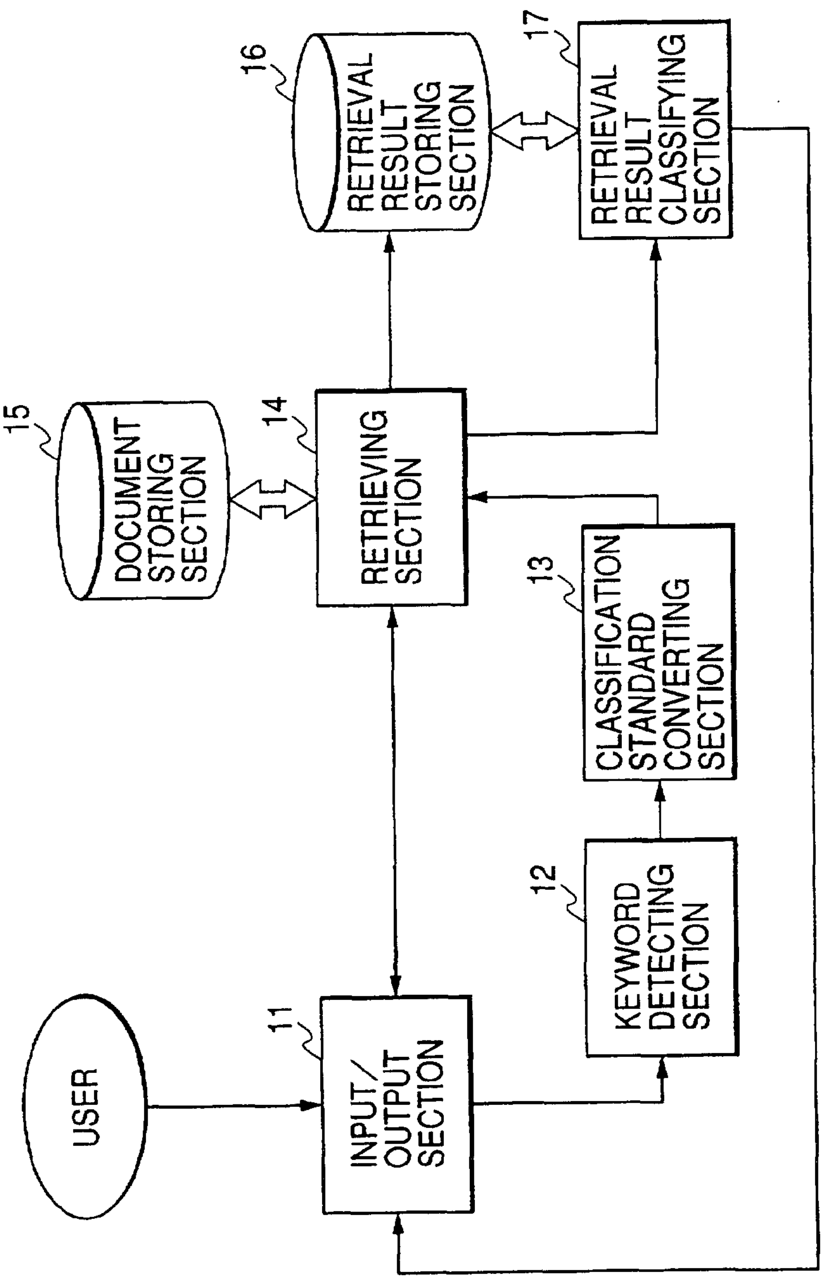
USER
11
INPUT/
OUTPUT
SECTION
12
KEYWORD
DETECTING
SECTION
13
CLASSIFICATION
STANDARD
CONVERTING
SECTION
14
RETRIEVING
SECTION
15
DOCUMENT
STORING
SECTION
16
RETRIEVAL
RESULT
STORING
SECTION
17
RETRIEVAL
RESULT
CLASSIFYING
SECTION

FIG. 7

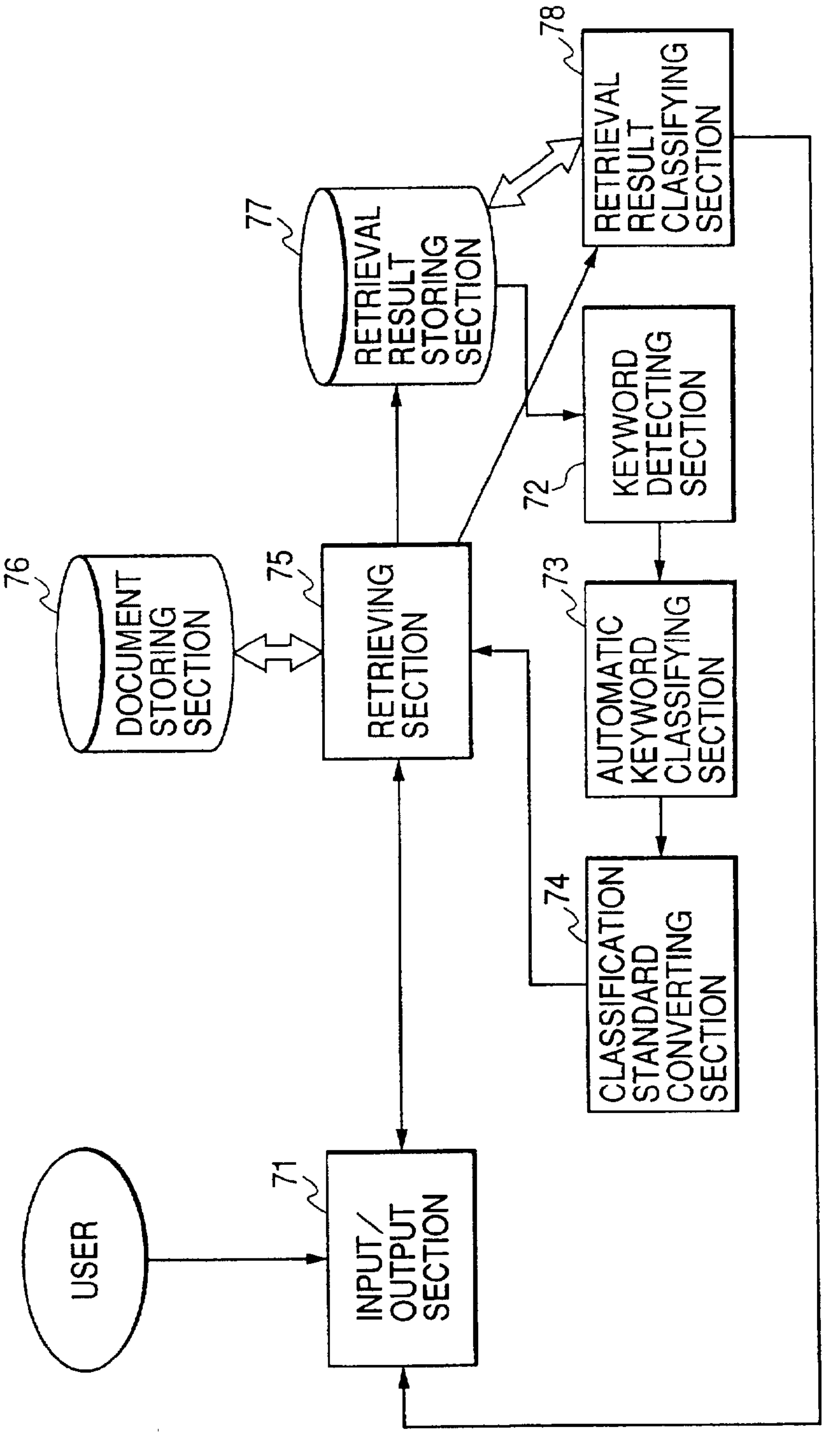
USER
INPUT/ OUTPUT SECTION
71
RETRIEVING SECTION
75
DOCUMENT STORING SECTION
76
RETRIEVAL RESULT STORING SECTION
77
KEYWORD DETECTING SECTION
72
AUTOMATIC KEYWORD CLASSIFYING SECTION
73
CLASSIFICATION STANDARD CONVERTING SECTION
74
RETRIEVAL RESULT CLASSIFYING SECTION
78

European Patent Office

# EUROPEAN SEARCH REPORT

Application Number
EP 00 30 7256

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1997, no. 08, 29 August 1997 (1997-08-29) & JP 09 091314 A (FUJI XEROX CO LTD), 4 April 1997 (1997-04-04) * abstract * --- | 1-3,8,9 | G06F17/30 |
| X | US 5 924 090 A (KRELLENSTEIN MARC F) 13 July 1999 (1999-07-13) * column 2, line 52 - column 3, line 65 * * column 4, line 26 - column 5, line 41; figures 1,2 * --- | 6,7,12 | |
| X | US 5 418 946 A (MORI TOSHIAKI) 23 May 1995 (1995-05-23) * abstract * * column 5, line 8 - column 6, line 6; figures 1-3 * --- | 1,8,9 | |
| X | US 5 519 865 A (KONDO SHOZO ET AL) 21 May 1996 (1996-05-21) * column 2, line 26 - column 3, line 36; figures 2-8 * * column 5, line 6 - column 7, line 9 * --- | 1,2,8,9 | TECHNICAL FIELDS SEARCHED (Int.Cl.7) G06F |
| X | PATENT ABSTRACTS OF JAPAN vol. 1997, no. 01, 31 January 1997 (1997-01-31) & JP 08 235160 A (CANON INC), 13 September 1996 (1996-09-13) * abstract * --- | 6,7,12 | |
| X | PATENT ABSTRACTS OF JAPAN vol. 018, no. 417 (P-1781), 4 August 1994 (1994-08-04) & JP 06 124308 A (FUJITSU LTD), 6 May 1994 (1994-05-06) * abstract * --- | 6,7 | |
| | -/-- | | |

The present search report has been drawn up for all claims

| Place of search | Date of completion of the search | Examiner |
|---|---|---|
| BERLIN | 16 January 2001 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 00 30 7256

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN<br>vol. 1999, no. 12,<br>29 October 1999 (1999-10-29)<br>& JP 11 195046 A (RICOH CO LTD),<br>21 July 1999 (1999-07-21)<br>* abstract *<br>----- | 1 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 16 January 2001 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 30 7256

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2001

| Patent document cited in search report | Publication date | Patent family member(s) | Publication date |
|---|---|---|---|
| JP 09091314 A | 04-04-1997 | NONE | |
| US 5924090 A | 13-07-1999 | AU 7271798 A | 24-11-1998 |
| | | EP 0979470 A | 16-02-2000 |
| | | WO 9849637 A | 05-11-1998 |
| US 5418946 A | 23-05-1995 | JP 5089173 A | 09-04-1993 |
| US 5519865 A | 21-05-1996 | JP 7044568 A | 14-02-1995 |
| | | DE 4428060 A | 02-02-1995 |
| JP 08235160 A | 13-09-1996 | NONE | |
| JP 06124308 A | 06-05-1994 | NONE | |
| JP 11195046 A | 21-07-1999 | NONE | |

EPO FORM P0459

For more details about this annex : see Official Journal of the European Patent Office, No. 12/82